# EUROPÄISCHE PATENTSCHRIFT

(11) **EP 4 268 559 B1**
(45) Veröffentlichungstag und Bekanntmachung des Hinweises auf die Patenterteilung: **18.06.2025**
(21) Anmeldenummer: 23155786.9
(22) Anmeldetag: 09.02.2023
(51) Int. Cl.: A01B 69/04, G05D 1/00

(54) **VERFAHREN ZUR EINSATZPLANUNG UND KOORDINATION EINER FAHRZEUGFLOTTE**
METHOD FOR SCHEDULING AND COORDINATING A FLEET OF VEHICLES
PROCÉDÉ DE PLANIFICATION ET DE COORDINATION DE DÉPLOIEMENT D'UNE FLOTTE DE VÉHICULES

(30) Priorität: 27.04.2022 DE 102022110106
(43) Veröffentlichungstag der Anmeldung: 01.11.2023
(73) Patentinhaber: CLAAS Selbstfahrende Erntemaschinen GmbH, 33428 Harsewinkel (DE)
(72) Erfinder: Mähler, Reinhold, 33378 Rheda-Wiedenbrück (DE); Ehlert, Christian, 33719 Bielefeld (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Eberhard, 33332 Gütersloh (DE); Apke, Christoph, 33659 Bielefeld (DE); Korthals, Timo, 33818 Leopoldshöhe (DE); Thiesmann, Waldemar, 49080 Osnabrück (DE); Schröder, Axel, 33332 Gütersloh (DE); Monkenbusch, Robin, 33378 Rheda-Wiedenbrück (DE)
(74) Vertreter: CLAAS Gruppe

(56) Entgegenhaltungen:
- EP-A2- 2 177 965
- US-A1- 2017 311 534

## Beschreibung

Die vorliegende Erfindung betrifft ein Verfahren zur Einsatzplanung und Koordination einer Fahrzeugflotte gemäß dem Oberbegriff des Anspruches 1. Weiterhin betrifft die vorliegende Erfindung ein datenbankbasiertes Verwaltungssystem gemäß dem Oberbegriff des Anspruches 14.

Ein Verfahren zur Koordination einer Fahrzeugflotte, die aus mehreren landwirtschaftlichen Arbeitsfahrzeugen besteht, durch die unterschiedliche landwirtschaftliche Arbeitsabläufe auf einem Feld im Wesentlichen zeitgleich durchgeführt werden, ist aus der EP 2 177 965 B1 bekannt. Die Arbeitsfahrzeuge der Fahrzeugflotte weisen zur Durchführung zumindest eines der landwirtschaftlichen Arbeitsabläufe Arbeitsaggregate auf, die Bestandteil des Arbeitsfahrzeugs sind und/oder an die Arbeitsfahrzeuge adaptiert werden, wobei zumindest ein Arbeitsfahrzeug der Fahrzeugflotte autonom betrieben wird. Gemäß dem aus der EP 2 177 965 B1 bekannten Verfahren wird einem Fahrzeug der Fahrzeugflotte eine Führungsfunktion zugewiesen und den weiteren Fahrzeugen eine Nachfolgerfunktion. Die Fahrzeuge, denen die Nachfolgerfunktion zugewiesen ist, folgen dem Fahrzeug mit zugewiesener Führungsfunktion in einem eingestellten seitlichen Abstand. Jedes Fahrzeug weist eine Bibliothek mit darin hinterlegten Maschinenverhaltensweisen zur Ausführung von landwirtschaftlichen Arbeitsabläufen sowie ein Koordinationssystem auf, welches dem jeweiligen Fahrzeug in Abhängigkeit von der Platzierung des jeweiligen Fahrzeugs, d.h. als Fahrzeug mit Führungsfunktion oder mit Nachfolgerfunktion, eine Funktion zur Ausführung des landwirtschaftlichen Arbeitsablaufs zuweist. Die Kommunikation der Fahrzeuge miteinander erfolgt unter Berücksichtigung der in der Bibliothek hinterlegten Maschinenverhaltensweisen, welche die Ausführung von spezifischen Aufgaben bzw. Teilaufgaben durch ein Fahrzeug definieren. Die Koordination der Fahrzeugflotte beschränkt sich auf den zeitgleichen gemeinsamen Einsatz auf einem zu bearbeitenden Feld.

Ein weiteres gattungsgemäßes Verfahren zum Durchführen landwirtschaftlicher Arbeitsvorgänge auf dem Feld unter Verwendung eines ersten und eines zweiten autonomen Fahrzeugs ist aus der US 2017/0311534 A1 bekannt.

Ausgehend vom vorstehend beschriebenen Stand der Technik liegt der Erfindung die Aufgabe zugrunde, ein Verfahren der eingangs genannten Art weiterzubilden, welches einen breiteren Anwendungsbereich einer zu koordinierenden Fahrzeugflotte ermöglicht. Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe durch die technischen Merkmale des nebengeordneten Anspruchs 14.

Vorteilhafte Weiterbildungen der Erfindung werden in den Unteransprüchen 2 bis 13 wiedergegeben.

Gemäß dem Anspruch 1 wird ein Verfahren zur Einsatzplanung und Koordination einer Fahrzeugflotte, die aus mehreren landwirtschaftlichen Arbeitsfahrzeugen besteht, vorgeschlagen. Durch die Arbeitsfahrzeuge der Fahrzeugflotte werden unterschiedliche landwirtschaftliche Arbeitsabläufe auf einem Feld im Wesentlichen zeitgleich oder zeitlich versetzt durchgeführt, wobei die Arbeitsfahrzeuge zur Durchführung zumindest eines der landwirtschaftlichen Arbeitsabläufe wenigstens ein Arbeitsaggregat aufweisen, welches Bestandteil des Arbeitsfahrzeugs ist und/oder an die Arbeitsfahrzeuge adaptiert wird, wobei zumindest ein Arbeitsfahrzeug der Fahrzeugflotte autonom betrieben wird. Erfindungsgemäß ist vorgesehen, dass mittels eines datenbankbasierten Verwaltungssystems die Einsatzplanung auf dem Feld durchgeführt wird, wobei bei der Durchführung einer Planung eines jeweiligen eine Abfolge von Arbeitsschritten umfassenden landwirtschaftlichen Arbeitsablaufes die der zu koordinierenden Fahrzeugflotte zur Verfügung stehenden autonomen Arbeitsfahrzeuge eingebunden werden, indem jedem Arbeitsschritt des landwirtschaftlichen Arbeitsablaufes zumindest ein autonomes Arbeitsfahrzeug zugeordnet wird, wobei zur Durchführung des dem autonomen Arbeitsfahrzeug zugeordneten Arbeitsschrittes von dem Verwaltungssystem bestimmte Einsatzparameter übermittelt werden, durch welche das zumindest eine autonome Arbeitsfahrzeug zur Durchführung des zugeordneten Arbeitsschrittes instruiert wird.

Der Erfindung liegt die Überlegung zugrunde, dass eine zu koordinierende Fahrzeugflotte, die zumindest ein autonomes Arbeitsfahrzeug, vorzugsweise mehrere autonome Arbeitsfahrzeuge, umfasst, bzw. einzelne zur Verfügung stehende autonome Arbeitsfahrzeuge dieser Fahrzeugflotte, bei der Planung eines Arbeitsablaufs berücksichtigt werden sollen. Im Rahmen der Einsatzplanung sollen die einzelnen autonomen Arbeitsfahrzeuge entsprechend der Planung eingesetzt bzw. beauftragt werden. Dabei kann das zumindest eine autonome landwirtschaftliche Arbeitsfahrzeug mit einem der Fahrzeugflotte zugehörigen bemannten landwirtschaftlichen Arbeitsfahrzeug zusammenwirken. Im Unterschied zum Stand der Technik wird das zumindest eine autonome Arbeitsfahrzeug von dem Verwaltungssystem durch die Übermittlung von Einsatzparameter hinsichtlich des zugeordneten durchzuführenden Arbeitsschrittes instruiert. Das autonome Arbeitsfahrzeug ist nicht unmittelbar von einem bemannten Arbeitsfahrzeug der Fahrzeugflotte abhängig, welches die Führungsfunktion übernimmt. Vielmehr kann das zumindest autonome Arbeitsfahrzeug erfindungsgemäß einzelne Arbeitsschritte eines landwirtschaftlichen Arbeitsablaufes wahrnehmen, die von denen anderer, insbesondere bemannter, Arbeitsfahrzeuge, die im Wesentlichen zeitgleich durchgeführt werden, abweichen können.

Die Formulierung Arbeitsaggregate, die Bestandteil des Arbeitsfahrzeugs sind und/oder die an die Arbeitsfahrzeuge adaptiert werden, umfasst sowohl der Be- und Verarbeitung dienende Arbeitsaggregate von als selbstfahrende Erntemaschinen ausgeführten Arbeitsfahrzeugen, wie Mähdrescher, Feldhäcksler, Roder und dergleichen, als auch an als Zugfahrzeuge ausgeführten Arbeitsfahrzeugen adaptierte Anbaugeräte, beispielsweise Bodenbearbeitungsgeräte, Spritzen, Düngevorrichtungen, Ballenpressen, Transportwagen, Vorsatzgeräte oder dergleichen, die zum Antreiben und Bewegen von dem als Zugfahrzeug ausgeführten Arbeitsfahrzeug abhängig sind.

Derartige autonome Arbeitsfahrzeuge zeichnen sich dadurch aus, dass kein Bediener zur Steuerung derselben vorhanden sein muss und werden daher auch als unbemannte Fahrzeuge bezeichnet. Diese autonomen Arbeitsfahrzeuge können geplante landwirtschaftliche Arbeitsabläufe oder davon umfasste Arbeitsschritte teilweise oder vollständig ausführen, wobei eine Führung dieser Einheiten während der Abarbeitung ohne aktiven Eingriff einer Person und/oder eines bemannten Arbeitsfahrzeugs als Begleitfahrzeug erfolgen kann. So kann sich ein autonomes Arbeitsfahrzeug beispielsweise entlang einer Fahrspur eines bemannten landwirtschaftlichen Arbeitsfahrzeugs orientieren oder aber anhand von GPS-Daten selbsttätig seine Fahrspur ermitteln.

Bevorzugt können als Einsatzparameter unter anderem Daten übermittelt werden, mit denen in Abhängigkeit vom durchzuführenden Arbeitsschritt spezifiziert wird, welchen Funktionsumfang das zumindest eine Arbeitsaggregat des autonomen Arbeitsfahrzeugs aufweist oder mit welchem Funktionsumfang des zumindest einen Arbeitsaggregates das autonome Arbeitsfahrzeug auszustatten ist. Auf diese Weise können im Rahmen der Einsatzplanung verfügbare autonome Arbeitsfahrzeuge entsprechend ihren Möglichkeiten einzelnen Arbeitsschritte bis hin zu einzelnen Arbeitsabläufen zugewiesen werden. Die Einsatzparameter bestimmen sich aus der Art des durchzuführenden Arbeitsablaufs und der darin enthaltenen Arbeitsschritte. Die Einsatzparameter können des Weiteren Daten enthalten, die es dem autonomen Arbeitsfahrzeug ermöglichen, ein zu adaptierendes Arbeitsaggregat zur Aufnahme zu lokalisieren, beispielsweise auf der Hofstätte oder auf dem Feld, und/oder für das Adaptieren erforderliche Anschlussmittel vorzugeben.

Hierzu können von dem Verwaltungssystem verfügbare Informationen ermittelt, aufbereitet und analysiert werden, anhand derer die technischen Anforderungen an das autonome Arbeitsfahrzeug mit den Anforderungen an die Durchführung der Arbeitsschritte von Arbeitsabläufen auf einem Feld abgeglichen werden.

Ein landwirtschaftlicher Arbeitsablauf kann zum Beispiel das Abernten des Bestands auf einem Feld umfassen, wobei sich der Arbeitsablauf zumindest in die Arbeitsschritte des Aberntens, des Überladens und des Abtransports gliedert. Für andere Arbeitsabläufe wie die Aussaat, die Bodenbearbeitung, das Düngen oder Spritzen, um nur einige weitere landwirtschaftliche Arbeitsabläufe zu nennen, gilt entsprechendes.

Insbesondere können dem Verwaltungssystem Planungsdaten zugeführt werden, welche von den, insbesondere autonomen, landwirtschaftlichen Arbeitsfahrzeugen erzeugt, erfasst und/oder bestimmt werden, sowie Planungsdaten, welche von externen Datenquellen bereitgestellt werden, wobei die von den landwirtschaftlichen Arbeitsfahrzeugen und/oder den externen Datenquellen zugeführten Planungsdaten zeitlich miteinander korrelieren oder zeitlich voneinander unabhängig sein können. Hierbei wird sich der Umstand zunutze gemacht, dass die landwirtschaftlichen Arbeitsfahrzeuge mit zumindest einer Sensoreinrichtung, in der Regel mit mehreren unterschiedlichen Sensoreinrichtungen, ausgestattet sind, um während der Ausführung einzelner Arbeitsschritte eines Arbeitsablaufes Messdaten aufzunehmen, auszuwerten und abzuspeichern. Die aufgenommenen Messdaten werden von einer Steuereinheit des autonomen Arbeitsfahrzeugs ausgewertet und zur Optimierung der Ansteuerung verwendet. Diese Messdaten sowie deren Auswertung können dabei nahezu zeitgleich, quasi in Echtzeit, oder zeitlich versetzt an das Verwaltungssystem als Planungsdaten für zu planende nachfolgende Arbeitsabläufe oder Arbeitsschritte übermittelt werden. Externe Datenquellen sind von den landwirtschaftlichen Arbeitsfahrzeugen unabhängige Datenquellen, beispielsweise das Internet, Satellitenaufnahmen und dergleichen mehr.

Hierzu können dem Verwaltungssystem Planungsdaten aus der Gruppe Bestandsdaten, Bodendaten, Flächendaten, Wetterdaten, Lokalisierungsdaten, Routendaten, Hinderniskartierungsdaten, Verbrauchsdaten, Maschinenzustandsdaten zugeführt werden. Verbrauchsdaten umfassen alle unmittelbar mit dem Einsatz zumindest des autonomen Arbeitsfahrzeugs verbunden Daten, die den Verbrauch von Betriebs- und Hilfsstoffen betreffen. Maschinenzustandsdaten umfassen alle Daten zumindest der autonomen Arbeitsfahrzeuge und Arbeitsaggregate, welche deren Einsatzfähigkeit betreffen.

Bevorzugt kann die Planung des jeweiligen landwirtschaftlichen Arbeitsablaufes basierend auf wenigstens einer vorzugebenden Zielsetzung und/oder Optimierungsstrategie durchgeführt werden. Die wenigstens eine vorzugebende Zielsetzung kann ökonomischer und/oder ökologischer Art sein. Insbesondere kann sich die wenigstens eine vorzugebende Zielsetzung auf den gesamten Arbeitsablauf, welcher beispielsweise auf einen Bodenbearbeitungsvorgang, einen Aussaatvorgang oder einen Erntevorgang auf einem Feld beschränkt sein kann, oder eine vollständige Vegetationsperiode mit allen damit verbundenen Arbeitsabläufe auf einem Feld beziehen. Optimierungsstrategien können beispielsweise spezifisch für einzelne, insbesondere die autonomen, Arbeitsfahrzeuge festgelegt werden. Insbesondere können Optimierungsstrategien mehrstufig sein. Beispielsweise kann eine Optimierungsstrategie zumindest die Stufen "auf dem Hof", "am Feld" und "im Feld" umfassen. Die erste Stufe "auf dem Hof" betrifft die Optimierung zumindest des autonomen landwirtschaftlichen Arbeitsfahrzeugs dabei hinsichtlich seiner Grundkonfiguration als Vorbereitung auf die weiteren Stufen. Die zweite Stufe "am Feld" betrifft die Optimierung zumindest des autonomen landwirtschaftlichen Arbeitsfahrzeugs dabei hinsichtlich einer arbeitsaggregatspezifischen Konfiguration und die dritte Stufe "im Feld" betrifft die optimierte Anpassung der Grundkonfiguration und der arbeitsaggregatspezifischen Konfiguration während einer Bearbeitung des Feldes.

Gemäß einer bevorzugten Weiterbildung können bei der Erstellung der Einsatzplanung Fahrtrouten zwischen einer Hofstätte und einem zu bearbeitenden Feld sowie zwischen zu bearbeitenden Feldern bestimmt werden, und es kann in Abhängigkeit von der Anzahl der autonomen Arbeitsfahrzeuge und ihrer individuellen Ausstattung mit Arbeitsaggregaten zumindest eine Transportart bestimmt werden, mittels der das zumindest eine autonome Arbeitsfahrzeug entsprechend der bestimmten Fahrtroute transferiert wird. Als Transportart kommt ein Transport mit einem geeigneten Transportmittel, beispielsweise auf einem Transporter, oder ein geführter Transport, beispielsweise unter Aufsicht durch eine Bedienperson auf dem autonomen Arbeitsfahrzeug oder einem Begleitfahrzeug, insbesondere einem bemannten Arbeitsfahrzeug der Fahrzeugflotte, in Betracht. Hierbei können neben der reinen Transportlogistik zusätzliche mit dem Einsatz autonomer Arbeitsfahrzeuge verbundene Aspekte berücksichtigt werden. Zusätzliche Aspekte können die Bearbeitungsreihenfolge von Feldern sein, das Bestimmen von Einfahrt- und Ausfahrtpunkten eines Feldes, insbesondere zum Zweck der Be- und Entladung, sowie die Festlegung von zu verwendenden Fahrspuren auf dem zu bearbeitenden Feld.

Erfindungsgemäss werden in Abhängigkeit von dem durch das zumindest eine autonome Arbeitsfahrzeug durchzuführenden Arbeitsschritt oder Arbeitsablauf Betriebsparameter für das zumindest eine integrierte oder adaptierte Arbeitsaggregat des autonomem Arbeitsfahrzeugs durch das Verwaltungssystem bestimmt und übermittelt. Die Betriebsparameter werden für das jeweilige Arbeitsaggregat spezifisch bestimmt und an das autonome Arbeitsfahrzeug übertragen. Das jeweilige Arbeitsaggregat kann mittels einer Steuerungsvorrichtung des autonomen Arbeitsfahrzeugs oder durch eine separate Steuerungsvorrichtung am Arbeitsaggregat entsprechend der übermittelten Betriebsparameter angesteuert werden.

Gemäß einer vorteilhaften Weiterbildung kann bei der Erstellung der Einsatzplanung anhand der zugeführten Planungsdaten zumindest eine Lokation im Umfeld der durch das zumindest eine autonome Arbeitsfahrzeug zu bearbeitenden Fläche bestimmt werden, welche bei Auftreten eines externen Ereignisses, welches zur Unterbrechung des landwirtschaftlichen Arbeitsablaufs führt, von dem zumindest einen autonomen Arbeitsfahrzeug angefahren wird. Ein externes Ereignis kann dabei ein Wetterumschwung oder das Auftreten einer Beschädigung an dem autonomen Arbeitsfahrzeug oder des daran adaptierten Arbeitsaggregates sein. In einer solchen Situation kann das autonome Arbeitsfahrzeug selbsttätig die Lokation ansteuern, um andere auf der zu bearbeitenden Fläche aktive, insbesondere autonome, Arbeitsfahrzeuge nicht zu behindern.

Weiter bevorzugt können bei der Erstellung der Einsatzplanung anhand der zugeführten Planungsdaten Abläufe zur Beschaffung, Aufnahme und/oder Übergabe von Betriebsmitteln durch die autonomen Arbeitsfahrzeuge und/oder zwischen den Arbeitsfahrzeugen bestimmt werden. Insbesondere die autonomen Arbeitsfahrzeuge bedürfen spezifischer Abläufe hinsichtlich der Aufnahme und/oder Übergabe von Betriebsmitteln, um deren störungs- bzw. unterbrechungsfreien Einsatz zu gewährleisten.

Insbesondere können die auf dem zu bearbeitenden Feld aktiven Arbeitsfahrzeug der Fahrzeugflotte untereinander im Datenaustausch stehen, damit das zumindest eine autonome Arbeitsfahrzeug über das Auftreten einer Situation, die den durchzuführenden Arbeitsschritt des landwirtschaftlichen Arbeitsablaufes beeinflusst, informiert wird. Beispielsweise kann das zumindest eine autonome Arbeitsfahrzeug über ein aktuell aufgetretenes Hindernis informiert werden, welches bei einer vorangegangen Routenplanung im Rahmen der Einsatzplanung nicht berücksichtigt werden konnte.

Bevorzugt kann das zumindest eine autonome Arbeitsfahrzeug während der Durchführung des landwirtschaftlichen Arbeitsablaufes Betriebsdaten durch zumindest eine Sensoreinrichtung erfassen und/oder bestimmen sowie diese Betriebsdaten aufzeichnen, und können die aufgezeichneten Betriebsdaten während und/oder nach der Durchführung des landwirtschaftlichen Arbeitsablaufes an das Verwaltungssystem übertragen werden. Damit das Verwaltungssystem den Energiebedarf des zumindest einen autonomen Arbeitsfahrzeugs bestimmen und/oder überwachen kann, ist es zweckmäßig, dass das zumindest eine autonome Arbeitsfahrzeug regelmäßig den Energieverbrauch betreffende Betriebsdaten ermittelt und überträgt. Diese den Energieverbrauch betreffenden Betriebsdaten können der Einsatzplanung zugrunde gelegt werden, um die Abläufe zur Beschaffung, Aufnahme und/oder Übergabe von Betriebsmitteln zu planen. Darüber hinaus kann anhand dieser Betriebsdaten für das jeweilige autonome Arbeitsfahrzeug eine Anpassung der aktuellen Einsatzplanung durchgeführt werden, wenn sich abzeichnet, dass die geplanten Abläufe zur Beschaffung, Aufnahme und/oder Übergabe von Betriebsmitteln die Ausführung des durchzuführenden Arbeitsschritts des landwirtschaftlichen Arbeitsablaufes zumindest negativ beeinflussen. Weiterhin können zu übermittelnde Betriebsdaten den Abarbeitungsgrad des durch das autonome Arbeitsfahrzeug durchzuführenden Arbeitsschritts betreffen. Denkbar ist auch die Übermittlung von Betriebsdaten, welche einen Verschleißzustand an dem autonomen Arbeitsfahrzeug und/oder dem Arbeitsgerät betreffen. Mittels der Betriebsdaten lässt sich sowohl die aktuelle Situation der Fahrzeugflotte bestimmen und darüber hinaus eine zukünftige Einsatzplanung für das jeweilige zu bearbeitete Feld verbessern.

Insbesondere kann die Fahrzeugflotte zumindest ein bemanntes Arbeitsfahrzeug umfassen, welches bei der Einsatzplanung auf dem Feld im Zusammenwirken mit dem zumindest einen autonomen Arbeitsfahrzeug berücksichtigt wird.

Insbesondere kann zum dezentralisierten Führen mehrerer auf einem Feld gemeinsam tätiger autonomer Arbeitsfahrzeuge ein Kommunikationssystem sowie eine Lokalisierungsinfrastruktur verwendet werden. Die Lokalisierungsinfrastruktur kann zumindest teilweise auf dem Feld bereitgestellt werden. Um ein sicheres Führen auf einem Feld gemeinsam tätiger autonomer Arbeitsfahrzeuge zu gewährleisten, ist es vorteilhaft eine örtlich begrenzte Lokalisierungsinfrastruktur zu verwenden, wodurch die räumliche Lage von Feldgrenzen als auch von daran unmittelbar angrenzende Bereiche, mit hoher Genauigkeit verfügbar ist. Als Lokalisierungsstruktur kann in einem einfachen Fall zumindest eine Drohne vorgesehen sein, welche die Lage von Feldgrenzen, Zufahrten und unmittelbar an das Feld angrenzende Bereiche optisch hochauflösend erfasst. Diese Bilddaten können durch das gemeinsame Kommunikationssystem an die autonomen Arbeitsfahrzeuge übertragen werden, um daraus entsprechende Fahrtrouten abzuleiten und abzuspeichern. Darüber hinaus bietet der Einsatz von Drohnen die Möglichkeit der Arbeitsqualitätsüberwachung des zumindest einen autonomen Arbeitsfahrzeugs. Alternativ oder zusätzlich können neben Positionsortungssignalen zusätzlich Korrektursignale eines Echtzeitkinematiksystems (RTK-System) verwendet werden, welche die Genauigkeit der von einem satellitengestützen Positionsortungssystem bereitgestellten Signale erhöhen.

Eine bevorzugte Weiterbildung sieht vor, dass die Arbeitsfahrzeuge der Fahrzeugflotte durch das Verwaltungssystem als ein Fahrzeugpool verwaltet werden, wobei die Nutzung eines oder mehrerer verfügbarer autonomer und bemannter Arbeitsfahrzeuge auf eine Benutzeranfrage hin freigeben wird.

Weiterhin wird die eingangs gestellte Aufgabe gemäß dem nebengeordneten Anspruch 15 durch ein datenbankbasiertes Verwaltungssystem mit einer Speichereinheit, einer Recheneinheit sowie einer Kommunikationseinheit, gelöst, welches zur Durchführung des Verfahrens nach einem der Ansprüche 1 bis 13 eingerichtet ist. Es darf auf alle Ausführungen zu dem vorschlagsgemäßen Verfahren zur Einsatzplanung und Koordination einer Fahrzeugflotte verwiesen werden.

Die vorliegende Erfindung wird nachstehend anhand eines in der Zeichnung dargestellten Ausführungsbeispieles näher erläutert.

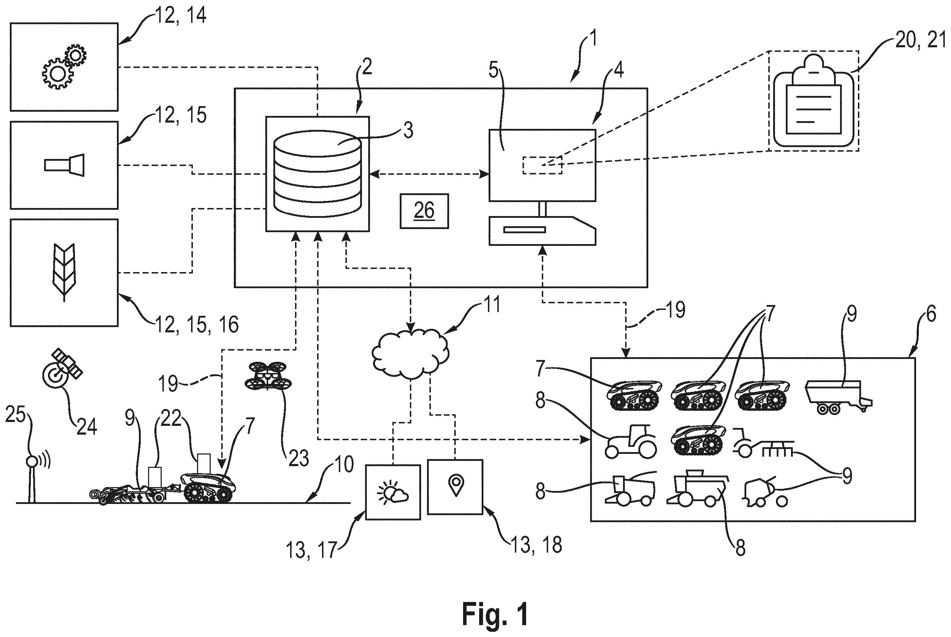

Fig. 1 zeigt exemplarisch eine schematische Darstellung eines datenbankbasierten Verwaltungssystems 1 zur Einsatzplanung und Koordination einer Fahrzeugflotte 6. Das Verwaltungssystem 1 umfasst eine Speichereinheit 2 mit wenigstens einer darin hinterlegten Datenbank 3 sowie einer Recheneinheit 4, die zur Verarbeitung von in der Speichereinheit 2 hinterlegten Daten eingerichtet ist. Die Recheneinheit 4 umfasst eine Eingabe-Ausgabeeinheit 5, mittels der Daten aus der Datenbank 3 abgerufen, eingegeben oder geändert werden können. Die Speichereinheit 2 und die Recheneinheit 4 können voneinander entfernt angeordnet sein. Die Speichereinheit 2 und die Recheneinheit 4 kommunizieren miteinander mittels eines Netzwerkes. Das Verwaltungssystem 1 kann auch cloudbasierend ausgeführt sein.

Die Fahrzeugflotte 6 besteht aus mehreren landwirtschaftlichen Arbeitsfahrzeugen 7, 8, durch die unterschiedliche landwirtschaftliche Arbeitsabläufe auf einem Feld im Wesentlichen zeitgleich oder zeitlich versetzt durchgeführt werden. Zumindest eines der landwirtschaftlichen Arbeitsfahrzeuge 7 der Fahrzeugflotte 6 wird autonom betrieben und zumindest eines der Arbeitsfahrzeuge 8 der Fahrzeugflotte 6 ist als bemanntes Arbeitsfahrzeug ausgeführt. Unter dem Begriff autonom betriebenes Arbeitsfahrzeug 7 ist zu verstehen, dass das Arbeitsfahrzeug 7 selbsttätig und unbeaufsichtigt einen eine Abfolge von Arbeitsschritten umfassenden landwirtschaftlichen Arbeitsablauf durchführen kann, ohne dass es eines Eingriffs durch eine Bedienperson bedarf. Die autonomen und bemannten Arbeitsfahrzeuge 7, 8 weisen zur Durchführung zumindest eines der landwirtschaftlichen Arbeitsabläufe Arbeitsaggregate 9 auf, welche Bestandteil des autonomen bzw. bemannten Arbeitsfahrzeugs 7, 8 sind, d.h. in das Arbeitsfahrzeug 7, 8 integriert sind, und/oder an die Arbeitsfahrzeuge 7, 8 adaptiert werden.

Die Arbeitsfahrzeuge 7, 8 können als selbstfahrende Erntemaschine oder Zugfahrzeuge ausgeführt sein. Arbeitsaggregate 9 sind, neben den in das jeweilige Arbeitsfahrzeug 7, 8 integrierten Arbeitsaggregaten, solche, die an das jeweilige Arbeitsfahrzeug 7, 8 adaptiert werden. Zu den zu adaptierenden Arbeitsaggregaten 9 gehören beispielsweise Bodenbearbeitungsgeräte, Spritzen, Düngevorrichtungen, Ballenpressen, Transportwagen, Vorsatzgeräte oder dergleichen, die zum Antreiben und Bewegen von dem Arbeitsfahrzeug 7, 8 abhängig sind.

Ein landwirtschaftlicher Arbeitsablauf kann kleinteilig sein, sich beispielsweise auf das Abernten eines Feldes 10 und die unmittelbar damit verbundenen Aktivitäten beschränken, die aus einer Abfolge von mehreren durchzuführenden Arbeitsschritten bestehen, d.h. zeitlich und räumlich eng begrenzt, z.B. auf einen Tag und ein Feld beschränkt. Ein landwirtschaftlicher Arbeitsablauf kann auch sehr umfangreich und komplex sein, wenn dieser eine vollständige Vegetationsperiode vom Anbau bis zur Ernte auf zumindest einem Feld 10 mit den damit verbundenen Maßnahmen umfasst.

Mittels des datenbankbasierten Verwaltungssystems 1 wird die Einsatzplanung und Koordination auf dem Feld durchgeführt. Hierzu werden dem Verwaltungssystem 1 Planungsdaten 12 zugeführt, welche von den landwirtschaftlichen Arbeitsfahrzeugen 7, 8 als Datenquellen erzeugt, erfasst und/oder bestimmt werden, sowie Planungsdaten 13, welche von externen Datenquellen 11 bereitgestellt werden, die unabhängig von den landwirtschaftlichen Arbeitsfahrzeugen 7, 8 sind. Die von den landwirtschaftlichen Arbeitsfahrzeugen 7, 8 und/oder den externen Datenquellen 11 zugeführten Planungsdaten 12, 13 können zeitlich miteinander korrelieren oder zeitlich voneinander unabhängig sein.

Dem Verwaltungssystem 1 werden Planungsdaten 12, 13 aus der Gruppe Bestandsdaten 16, Bodendaten, Ertragsdaten 15, Flächendaten, Wetterdaten 17, Lokalisierungsdaten 18, Routendaten, Hinderniskartierungsdaten, Verbrauchsdaten, Maschinenzustandsdaten 14 zugeführt werden. Verbrauchsdaten umfassen alle unmittelbar mit dem Einsatz zumindest des autonomen Arbeitsfahrzeugs 7 verbunden Daten, die den Verbrauch von Betriebs- und Hilfsstoffen betreffen. Maschinenzustandsdaten 14 umfassen alle Daten zumindest der autonomen Arbeitsfahrzeuge 7 und Arbeitsaggregate 9, welche deren Einsatzfähigkeit betreffen, beispielsweise Verschleißdaten, Reparaturdaten, Verfügbarkeit und dergleichen. Maschinenzustandsdaten 14 der bemannten Arbeitsfahrzeuge 8 werden dem Verwaltungssystem 1 ebenfalls zugeführt. So kann beispielsweise ein Ausfall eines bemannten Arbeitsfahrzeuge 8 bei einer Anpassung der Einsatzplanung berücksichtigt werden. So kann das Verwaltungssystem 1 beispielsweise veranlassen, dass ein weiteres autonomes Arbeitsfahrzeug 7 bei entsprechender Eignung an dessen Stelle tritt.

Durch das Verwaltungssystem 1 werden bei der Durchführung einer Planung eines jeweiligen eine Abfolge von Arbeitsschritten umfassenden landwirtschaftlichen Arbeitsablaufes zumindest die der zu koordinierenden Fahrzeugflotte 6 zur Verfügung stehenden autonomen Arbeitsfahrzeuge 7 eingebunden, indem jedem Arbeitsschritt des landwirtschaftlichen Arbeitsablaufes zumindest eines der autonomen Arbeitsfahrzeug 7 zugeordnet wird. Dabei werden zur Durchführung des dem autonomen Arbeitsfahrzeug 7 zugeordneten Arbeitsschrittes von dem Verwaltungssystem 1 bestimmte Einsatzparameter 19 übermittelt, durch welche das zumindest eine autonome Arbeitsfahrzeug 7 zur Durchführung des zugeordneten Arbeitsschrittes instruiert wird.

Als Einsatzparameter 19 werden unter anderem Daten an das autonome Arbeitsfahrzeug 7 übermittelt, mit denen in Abhängigkeit vom durchzuführenden Arbeitsschritt spezifiziert wird, welchen Funktionsumfang das zumindest eine in das autonome Arbeitsfahrzeug 7 integrierte Arbeitsaggregat 9 aufweist oder mit welchem Funktionsumfang des zumindest einen Arbeitsaggregates 9 das autonome Arbeitsfahrzeug 7 auszustatten ist.

Die Einsatzparameter 19 werden von dem Verwaltungssystem 1 zudem dazu verwendet, bei der Einsatzplanung die Geeignetheit der verfügbaren autonomen Arbeitsfahrzeuge 7 zu bestimmen.

Die Planung des jeweiligen landwirtschaftlichen Arbeitsablaufes durch das Verwaltungssystem 1 wird auf wenigstens einer vorzugebenden Zielsetzung 20 und/oder Optimierungsstrategie 21 basierend durchgeführt. Eine Zielsetzung 20 kann beispielsweise ein definiertes Zeitfenster sein, innerhalb dessen ein Arbeitsablauf, wie das Abernten eines Feldes, vollständig abgeschlossen sein soll. Hierzu kann eine Bedienperson mittels der Eingabe-Ausgabeeinheit 5 eine Zielsetzung 20 eingeben und/oder aus in der Datenbank 3 hinterlegten Zielsetzungen 20 auswählen. Letztere lassen sich durch die Bedienperson modifizieren. Die Zielsetzungen 20 können sich auf den gesamten Arbeitsablauf, welcher beispielsweise auf einen Bodenbearbeitungsvorgang, einen Aussaatvorgang oder einen Erntevorgang auf einem Feld beschränkt sein kann oder eine vollständige Vegetationsperiode auf dem Feld 10 umfasst, beziehen.

Durch die Eingabe-Ausgabeeinheit 5 können zudem Optimierungsstrategien 21 eingegeben oder aus bereits hinterlegten Optimierungsstrategien 21 ausgewählt werden. Optimierungsstrategien 21 können beispielsweise spezifisch für einzelne, insbesondere die autonomen, Arbeitsfahrzeuge 7, aber auch die bemannten Arbeitsfahrzeuge 8 festgelegt werden. Insbesondere können die Optimierungsstrategien 21 mehrstufig sein. Beispielsweise kann eine Optimierungsstrategie 21 zumindest die Stufen "auf dem Hof", "am Feld" und "im Feld" umfassen. Die erste Stufe "auf dem Hof" betrifft die Optimierung des landwirtschaftlichen Arbeitsfahrzeugs 7, 8 dabei hinsichtlich seiner Grundkonfiguration als Vorbereitung auf die weiteren Stufen. Die zweite Stufe "am Feld" betrifft die Optimierung des landwirtschaftlichen Arbeitsfahrzeugs 7, 8 dabei hinsichtlich seiner arbeitsaggregatspezifischen Konfiguration und die dritte Stufe "im Feld" betrifft die optimierte Anpassung der Grundkonfiguration und der arbeitsaggregatspezifischen Konfiguration während einer Bearbeitung des Feldes 10.

Bei der Erstellung der Einsatzplanung werden Fahrtrouten zwischen einer Hofstätte und einem zu bearbeitenden Feld 10 sowie zwischen zu bearbeitenden Feldern 10 bestimmt. Dabei wird in Abhängigkeit von der Anzahl der autonomen Arbeitsfahrzeuge 7 und ihrer individuellen Ausstattung mit Arbeitsaggregaten 9 zumindest eine Transportart bestimmt, mittels der das zumindest eine autonome Arbeitsfahrzeug 7 entsprechend der bestimmten Fahrtroute transferiert wird. Der Transfer des zumindest einen autonomen Arbeitsfahrzeugs 7 auf einer öffentlichen Straße kann beispielsweise mittels eines Transporters erfolgen. Zwischen zusammenhängenden Feldern 10 kann sich das zumindest eine autonome Arbeitsfahrzeug 7 selbsttätig entsprechend einer vorgegeben Fahrtroute bewegen oder durch ein Begleitfahrtzeug, insbesondere eines der bemannten Arbeitsfahrzeuge 8, geführt werden.

Bei der Erstellung der Einsatzplanung anhand der zugeführten Planungsdaten wird zumindest eine Lokation im Umfeld des durch das zumindest eine autonome Arbeitsfahrzeug 7 zu bearbeitenden Feldes 10 bestimmt, welche bei Auftreten eines externen Ereignisses, welches zur Unterbrechung des landwirtschaftlichen Arbeitsablaufs führt, von dem zumindest einen autonomen Arbeitsfahrzeug 7, insbesondere autonom, angefahren wird. Dies dient der Berücksichtigung externer Ereignisse wie einem Wetterumschwung oder dem Auftreten einer Beschädigung an dem autonomen Arbeitsfahrzeug 7, welche die weitere Ausführung des Arbeitsschrittes verhindert. In einer solchen Situation kann das betreffende autonome Arbeitsfahrzeug 7 die Lokation autonom anfahren, um andere auf dem Feld 10 befindliche Arbeitsfahrzeuge 7, 8 nicht zu behindern.

Gemäß einem weiteren Aspekt werden bei der Erstellung der Einsatzplanung anhand der zugeführten Planungsdaten Abläufe zur Beschaffung, Aufnahme und/oder Übergabe von Betriebsmitteln durch die autonomen Arbeitsfahrzeuge 7 und/oder zwischen den autonomen und bemannten Arbeitsfahrzeugen 7, 8 bestimmt. Hierbei stehen die auf dem zu bearbeitenden Feld 10 aktiven Arbeitsfahrzeug 7, 8 der Fahrzeugflotte 6 untereinander im Datenaustausch. Insbesondere die autonomen Arbeitsfahrzeuge 7 überwachen sensorisch ihre Betriebsmittel, um einen akuten Bedarf zu detektieren und an ein dafür vorgesehenes autonomes Arbeitsfahrzeug 7 zu übermitteln. Betriebsmittel können dabei beispielsweise Treibstoffe, Saatgutgut, Düngemittel oder dergleichen sein.

Zudem stehen die auf dem zu bearbeitenden Feld 10 aktiven Arbeitsfahrzeuge 7, 8 der Fahrzeugflotte 6 untereinander im Datenaustausch, damit das zumindest eine autonome Arbeitsfahrzeug 7 über das Auftreten einer Situation, die den durchzuführenden Arbeitsschritt des landwirtschaftlichen Arbeitsablaufes beeinflusst, zumindest informiert werden kann.

Durch das zumindest eine autonome Arbeitsfahrzeug 7 werden während der Durchführung des landwirtschaftlichen Arbeitsablaufes Betriebsdaten durch zumindest eine dem autonomen Arbeitsfahrzeug 7 zugeordnete Sensoreinrichtung 22 erfasst und/oder bestimmt sowie aufgezeichnet. Die zumindest eine Sensoreinrichtung 22 kann an dem autonomen Arbeitsfahrzeug 7 angeordnet sein und/oder an dem zu adaptierenden Arbeitsaggregat 9. Weist das autonome Arbeitsfahrzeug 7 integrierte Arbeitsaggregat 9 auf, so kann diesen zumindest eine Sensoreinrichtung 22 zugeordnet sein. Die durch das autonome Arbeitsfahrzeug 7 aufgezeichneten Betriebsdaten werden während und/oder nach der Durchführung des landwirtschaftlichen Arbeitsablaufes automatisch an das Verwaltungssystem 1 übertragen.

Zum dezentralisierten Führen mehrerer auf dem Feld 10 gemeinsam tätiger autonomer Arbeitsfahrzeuge 7 kommt ein Kommunikationssystem sowie eine Lokalisierungsinfrastruktur zur Anwendung, welche auf dem Feld 10 bereitgestellt wird. Das Kommunikationssystem ist beispielsweise ein Funknetz, welches es den Arbeitsfahrzeugen 7, 8 ermöglicht, bei ihrem Einsatz auf dem Feld 10 zumindest untereinander zu kommunizieren. Bevorzugt kann über das Funknetz auch mit dem Verwaltungssystem 1 kommuniziert werden.

Um ein sicheres Führen der auf einem Feld gemeinsamen tätigen autonomen Arbeitsfahrzeuge 7 zu gewährleisten, ist es vorteilhaft, eine örtlich begrenzte Lokalisierungsinfrastruktur zu verwenden, wodurch die räumliche Lage von Feldgrenzen als auch von daran unmittelbar angrenzenden Bereichen, mit hoher Genauigkeit verfügbar ist. Als Lokalisierungsinfrastruktur kann in einem einfachen Fall zumindest eine Drohne 23 vorgesehen sein, welche die Lage von Feldgrenzen, Zufahrten und unmittelbar an das Feld 10 angrenzende Bereiche optisch hochauflösend erfasst. Diese Bilddaten können durch das gemeinsame Kommunikationssystem an das Verwaltungssystem 1 und/oder die autonomen Arbeitsfahrzeuge 7 übertragen werden, um daraus entsprechende Fahrtrouten abzuleiten und abzuspeichern. Darüber hinaus bietet der Einsatz vor Drohnen 23 generell die Möglichkeit der Arbeitsqualitätsüberwachung des zumindest einen autonomen Arbeitsfahrzeugs 7 auf dem Feld 10. Alternativ oder zusätzlich können neben Positionsortungssignalen eines Satelliten 24 zusätzlich Korrektursignale eines Echtzeitkinematiksystems 25 (RTK-System) verwendet werden, welche die Genauigkeit der von einem satellitengestützen Positionsortungssystem bereitgestellten Signale erhöhen. Mittels der Lokalisierungsinfrastruktur können die Lokalisierungsdaten 18 bereitgestellt werden. Darüber hinaus können mittels der Lokalisierungsinfrastruktur die Routendaten oder Hinderniskartierungsdaten erstellt oder bestehende modifiziert werden.

Gemäß einem weiteren Aspekt werden die autonomen und bemannten Arbeitsfahrzeuge 7, 8 der Fahrzeugflotte 6 sowie die daran zu adaptierenden Arbeitsaggregate 9 durch das Verwaltungssystem 1 als ein Fahrzeugpool verwaltet, wobei die Nutzung eines oder mehrerer verfügbarer autonomer und/oder bemannter Arbeitsfahrzeuge 7, 8 auf eine Benutzeranfrage hin freigeben wird. Dabei kann mittels einer Datenverarbeitungsvorrichtung, die als stationärer Rechner oder als mobiles Datenverarbeitungsgerät wie ein Mobilfunktelefon oder Tablet ausgeführt sein kann, eine Anfrage an das Verwaltungssystem 1 übermittelt werden, welche Auftragsdaten beinhaltet, die auf Art, Umfang und Zeitpunkt der Nutzung eines oder mehrerer verfügbarer autonomer und bemannter Arbeitsfahrzeuge 7, 8 schließen lassen. Eine das Verwaltungssystem 1 administrierende Person kann nach Analyse der Auftragsdaten durch das Verwaltungssystem 1 über die Benutzeranfrage entscheiden. Denkbar ist auch eine automatische Beantwortung der Benutzeranfrage durch das Verwaltungssystem 1. Dieser Aspekt der Erfindung kann insbesondere für Lohnunternehmen von Bedeutung sein.

### Bezugszeichenliste

- 1: Verwaltungssystem
- 2: Speichereinheit
- 3: Datenbank
- 4: Recheneinheit
- 5: Eingabe-Ausgabeeinheit
- 6: Fahrzeugflotte
- 7: Autonomes Arbeitsfahrzeug
- 8: Arbeitsfahrzeug
- 9: Arbeitsaggregat
- 10: Feld
- 11: Externe Datenquelle
- 12: Planungsdaten
- 13: Planungsdaten
- 14: Maschinenzustandsdaten
- 15: Ertragsdaten
- 16: Bestandsdaten
- 17: Wetterdaten
- 18: Lokalisierungsdaten
- 19: Einsatzparameter
- 20: Zielsetzung
- 21: Optimierungsstrategie
- 22: Sensoreinrichtung
- 23: Drohne
- 24: Satellit
- 25: Echtzeitkinematiksystem
- 26: Kommunikationseinheit

## Patentansprüche

1. Verfahren zur Einsatzplanung und Koordination einer Fahrzeugflotte (6), die aus mehreren landwirtschaftlichen Arbeitsfahrzeugen (7, 8) besteht, durch die unterschiedliche landwirtschaftliche Arbeitsabläufe auf einem Feld (10) im Wesentlichen zeitgleich oder zeitlich versetzt durchgeführt werden, wobei die Arbeitsfahrzeuge (7, 8) zur Durchführung zumindest eines der landwirtschaftlichen Arbeitsabläufe wenigstens ein Arbeitsaggregat (9) aufweisen, welches Bestandteil des Arbeitsfahrzeugs (7, 8) ist und/oder an die Arbeitsfahrzeuge (7, 8) adaptiert wird, wobei zumindest ein Arbeitsfahrzeug (7) der Fahrzeugflotte (6) autonom betrieben wird, wobei mittels eines datenbankbasierten Verwaltungssystems (1) die Einsatzplanung auf dem Feld (10) durchgeführt wird, wobei bei der Durchführung einer Planung eines jeweiligen eine Abfolge von Arbeitsschritten umfassenden landwirtschaftlichen Arbeitsablaufes die der zu koordinierenden Fahrzeugflotte (6) zur Verfügung stehenden autonomen Arbeitsfahrzeuge (7) eingebunden werden, indem jedem Arbeitsschritt des landwirtschaftlichen Arbeitsablaufes zumindest ein autonomes Arbeitsfahrzeug (7) zugeordnet wird, wobei zur Durchführung des dem autonomen Arbeitsfahrzeug (7) zugeordneten Arbeitsschrittes von dem Verwaltungssystem (1) bestimmte Einsatzparameter (19) übermittelt werden, durch welche das zumindest eine autonome Arbeitsfahrzeug (7) zur Durchführung des zugeordneten Arbeitsschrittes instruiert wird, **dadurch gekennzeichnet, dass** in Abhängigkeit von dem durch das zumindest eine autonome Arbeitsfahrzeug (7) durchzuführenden landwirtschaftlichen Arbeitsablauf Betriebsparameter für das zumindest eine integrierte oder adaptierte Arbeitsaggregat (9) des autonomem Arbeitsfahrzeugs (7) durch das Verwaltungssystem (1) bestimmt und übermittelt werden.

2. Verfahren nach Anspruch 1, **dadurch gekennzeichnet, dass** als Einsatzparameter (19) Daten übermittelt werden, mit denen in Abhängigkeit vom durchzuführenden Arbeitsschritt spezifiziert wird, welchen Funktionsumfang das zumindest eine Arbeitsaggregat (9) des autonomen Arbeitsfahrzeugs (7) aufweist oder mit welchem Funktionsumfang des zumindest einen Arbeitsaggregates (9) das autonome Arbeitsfahrzeug (7) auszustatten ist.

3. Verfahren nach Anspruch 1 oder 2, **dadurch gekennzeichnet, dass** dem Verwaltungssystem (1) Planungsdaten (12) zugeführt werden, welche von den landwirtschaftlichen Arbeitsfahrzeugen (7, 8) erzeugt, erfasst und/oder bestimmt werden sowie Planungsdaten (13), welche von externen Datenquellen (11) bereitgestellt werden, wobei die von den landwirtschaftlichen Arbeitsfahrzeugen (7, 8) und/oder den externen Datenquellen (11) zugeführten Planungsdaten (12, 13) zeitlich miteinander korrelieren oder zeitlich voneinander unabhängig sind.

4. Verfahren nach Anspruch 3, **dadurch gekennzeichnet, dass** dem Verwaltungssystem (1) Planungsdaten (12, 13) aus der Gruppe Bestandsdaten (16), Bodendaten, Ertragsdaten (15), Flächendaten, Wetterdaten (17), Lokalisierungsdaten (18), Routendaten, Hinderniskartierungsdaten, Verbrauchsdaten, Maschinenzustandsdaten (14) zugeführt werden.

5. Verfahren nach einem der vorangehenden Ansprüche, **dadurch gekennzeichnet, dass** die Planung des jeweiligen landwirtschaftlichen Arbeitsablaufes basierend auf wenigstens einer vorzugebenden Zielsetzung (20) und/oder Optimierungsstrategie (21) durchgeführt wird.

6. Verfahren nach einem der vorangehenden Ansprüche, **dadurch gekennzeichnet, dass** bei der Erstellung der Einsatzplanung Fahrtrouten zwischen einer Hofstätte und einem zu bearbeitenden Feld (10) sowie zwischen zu bearbeitenden Feldern (10) bestimmt werden, und dass in Abhängigkeit von der Anzahl der autonomen Arbeitsfahrzeuge (7) und ihrer individuellen Ausstattung mit Arbeitsaggregaten (9) zumindest eine Transportart bestimmt wird, mittels der das zumindest eine autonome Arbeitsfahrzeug (7) entsprechend der bestimmten Fahrtroute transferiert wird.

7. Verfahren nach einem der Ansprüche 2 bis 6, **dadurch gekennzeichnet, dass** bei der Erstellung der Einsatzplanung anhand der zugeführten Planungsdaten (12, 13) zumindest eine Lokation im Umfeld des durch das zumindest eine autonome Arbeitsfahrzeug (7) zu bearbeitenden Feldes (10) bestimmt wird, welche bei Auftreten eines externen Ereignisses, welches zur Unterbrechung des landwirtschaftlichen Arbeitsablaufs führt, von dem zumindest einen autonomen Arbeitsfahrzeug (7) angefahren wird.

8. Verfahren nach einem der Ansprüche 2 bis 7, **dadurch gekennzeichnet, dass** bei der Erstellung der Einsatzplanung anhand der zugeführten Planungsdaten (12, 13) Abläufe zur Beschaffung, Aufnahme und/oder Übergabe von Betriebsmitteln durch die autonomen Arbeitsfahrzeuge (7) und/oder zwischen den Arbeitsfahrzeugen (7, 8) bestimmt werden.

9. Verfahren nach einem der vorangehenden Ansprüche, **dadurch gekennzeichnet, dass** die auf dem zu bearbeitenden Feld aktiven Arbeitsfahrzeug (7, 8) der Fahrzeugflotte (6) untereinander im Datenaustausch stehen, damit das zumindest eine autonome Arbeitsfahrzeug (7) über das Auftreten einer Situation, die den durchzuführenden Arbeitsschritt des landwirtschaftlichen Arbeitsablaufes beeinflusst, informiert wird.

10. Verfahren nach einem der vorangehenden Ansprüche, **dadurch gekennzeichnet, dass** das zumindest eine autonome Arbeitsfahrzeug (7) während der Durchführung des landwirtschaftlichen Arbeitsablaufes Betriebsdaten durch zumindest eine Sensoreinrichtung (22) erfasst und/oder bestimmt sowie diese Betriebsdaten aufzeichnet, und dass die aufgezeichneten Betriebsdaten während und/oder nach der Durchführung des landwirtschaftlichen Arbeitsablaufes an das Verwaltungssystem (1) übertragen werden.

11. Verfahren nach einem der vorangehenden Ansprüche, **dadurch gekennzeichnet, dass** die Fahrzeugflotte (6) zumindest ein bemanntes Arbeitsfahrzeug (8) umfasst, welches bei der Einsatzplanung auf dem Feld (10) im Zusammenwirken mit dem zumindest einen autonomen Arbeitsfahrzeug (7) berücksichtigt wird.

12. Verfahren nach einem der vorangehenden Ansprüche, **dadurch gekennzeichnet, dass** zum dezentralisierten Führen mehrerer auf einem Feld (10) gemeinsam tätiger autonomer Arbeitsfahrzeuge (7) ein Kommunikationssystem sowie eine Lokalisierungsinfrastruktur (23, 24, 25) verwendet wird.

13. Verfahren nach einem der vorangehenden Ansprüche, **dadurch gekennzeichnet, dass** die Arbeitsfahrzeuge (7, 8) der Fahrzeugflotte (6) durch das Verwaltungssystem (1) als ein Fahrzeugpool verwaltet werden, wobei die Nutzung eines oder mehrerer verfügbarer autonomer und bemannter Arbeitsfahrzeuge (7, 8) auf eine Benutzeranfrage hin freigeben wird.

14. Datenbankbasiertes Verwaltungssystem (1) mit einer Speichereinheit (2), einer Recheneinheit (4) sowie einer Kommunikationseinheit (26), **gekennzeichnet dadurch, dass** das Verwaltungssystem (1) zur Durchführung des Verfahrens nach einem der Ansprüche 1 bis 13 eingerichtet ist.

## Claims

1. A method for the deployment planning and coordination of a vehicle fleet (6) which consists of a plurality of agricultural working vehicles (7, 8), by which different agricultural working procedures are carried out on a field (10) substantially concurrently or at different times, wherein, for carrying out at least one of the agricultural working procedures, the working vehicles (7, 8) have at least one working assembly (9) which is a component of the working vehicle (7, 8) and/or is adapted to the working vehicles (7, 8), wherein at least one working vehicle (7) of the vehicle fleet (6) is operated autonomously, wherein
the deployment planning on the field (10) is carried out by means of a database-based management system (1) wherein, when carrying out planning of an agricultural working procedure respectively comprising a sequence of working steps, the autonomous working vehicles (7) which are available to the vehicle fleet (6) to be coordinated are integrated, whereby at least one autonomous working vehicle (7) is associated with each working step of the agricultural working procedure, wherein specific deployment parameters (19) are transmitted by the management system (1) in order to carry out the working step associated with the autonomous working vehicle (7), through which the at least one autonomous working vehicle (7) is instructed to carry out the associated working step, **characterized in that** operational parameters for the at least one integrated or adapted working assembly (9) of the autonomous working vehicle (7) are specified and transmitted by the management system (1) as a function of the agricultural working procedure to be carried out by the at least one autonomous working vehicle (7).

2. The method according to claim 1, **characterized in that** data are transmitted as the deployment parameters (19), which specify, as a function of the working step to be carried out, which range of functions the at least one working assembly (9) of the autonomous working vehicle (7) has or with which range of functions the at least one working assembly (9) of the autonomous working vehicle (7) is to be equipped.

3. The method according to claim 1 or claim 2, **characterized in that** planning data (12) which are generated, detected and/or specified by the agricultural working vehicles (7, 8), as well as planning data (13) which are provided from external data sources (11) are supplied to the management system (1), wherein the planning data (12, 13) supplied from the agricultural working vehicles (7, 8) and/or the external data sources (11) correlate chronologically with each other or are chronologically independent of each other.

4. The method according to claim 3, **characterized in that** planning data (12, 13) from the group of: field crop data (16), ground data, yield data (15), area data, weather data (17), localization data (18), route data, obstacle mapping data, consumption data, machine status data (14) are supplied to the management system (1).

5. The method according to one of the preceding claims, **characterized in that** the planning of the respective agricultural working procedures is carried out on the basis of at least one objective (20) and/or optimization strategy (21) to be stipulated.

6. The method according to one of the preceding claims, **characterized in that** when preparing the deployment plan, travel routes between a farmstead and a field (10) to be processed as well as between fields (10) to be processed are specified, and **in that**, as a function of the number of autonomous working vehicles (7) and their individual outfitting with working assemblies (9), at least one type of transport is specified, by means of which the at least one autonomous working vehicle (7) is transferred in accordance with the specified travel route.

7. The method according to one of claims 2 to 6, **characterized in that** when preparing the deployment plan with the aid of the supplied planning data (12, 13), at least one location in the area surrounding the field (10) to be processed by the at least one autonomous working vehicle (7) is specified, to which the at least one autonomous working vehicle (7) moves when an external event occurs which leads to interruption of the agricultural working procedure.

8. The method according to one of claims 2 to 7, **characterized in that** when preparing the deployment plan with the aid of the supplied planning data (12, 13), procedures are specified for the procurement, pickup and/or transfer of operating resources by the autonomous working vehicles (7) and/or between the working vehicles (7, 8).

9. The method according to one of the preceding claims, **characterized in that** the active working vehicle (7, 8) on the field to be processed interchanges data with the vehicle fleet (6), so that the at least one autonomous working vehicle (7) is informed about the occurrence of a situation which influences the working step of the agricultural working procedure to be carried out.

10. The method according to one of the preceding claims, **characterized in that** while carrying out the agricultural working procedure, the at least one autonomous working vehicle (7) detects and/or specifies operational data by at least one sensor device (22) as well as records these operational data, and **in that** the recorded operational data are transmitted to the management system (1) during and/or after carrying out the agricultural working procedure.

11. The method according to one of the preceding claims, **characterized in that** the vehicle fleet (6) comprises at least one manned working vehicle (8) which is taken into consideration during the deployment planning on the field (10) in conjunction with the at least one autonomous working vehicle (7).

12. The method according to one of the preceding claims, **characterized in that** a communication system as well as a localization infrastructure (23, 24, 25) are used for the decentralized guidance of a plurality of autonomous working vehicles (7) which are operating together on a field (10).

13. The method according to one of the preceding claims, **characterized in that** the working vehicles (7, 8) of the vehicle fleet (6) are managed as a vehicle pool by the management system (1), wherein the utilization of one or more available autonomous and manned working vehicles (7, 8) is enabled in response to a user request.

14. A database-based management system (1) with a storage unit (2), a computing unit (4) as well as a communications unit (26), **characterized in that** the management system (1) is configured for carrying out the method according to one of claims 1 to 13.

## Revendications

1. Procédé de planification de déploiement et de coordination d'une flotte de véhicules (6) qui se compose de plusieurs engins agricoles (7, 8) avec lesquels différents processus de travail agricole sont exécutés dans un champ (10), de manière sensiblement simultanée ou avec un décalage dans le temps, les engins agricoles (7, 8) présentant, pour l'exécution d'au moins un des processus de travail agricole, au moins une unité de travail (9) qui fait partie de l'engin (7, 8) et/ou est adaptée aux engins (7, 8), au moins un engin (7) de la flotte de véhicules (6) fonctionnant de manière autonome, selon lequel
la planification du déploiement dans le champ (10) est réalisée au moyen d'un système de gestion (1) fondé sur une base de données, sachant que lors de l'exécution d'une planification d'un processus de travail agricole comportant une suite d'étapes de travail, les engins autonomes (7) disponibles pour la flotte de véhicules à coordonner sont intégrés en associant au moins un engin autonome (7) à chaque étape de travail du processus de travail agricole, sachant que pour l'exécution de l'étape de travail associée à l'engin autonome (7), le système de gestion (1) transmet des paramètres d'utilisation (19) définis, avec lesquels l'engin autonome (7), au nombre d'au moins un, reçoit des instructions pour l'exécution de l'étape de travail associée, **caractérisé en ce que**
en fonction du processus de travail agricole devant être exécuté par l'engin autonome (7), au nombre d'au moins un, des paramètres de fonctionnement pour l'unité de travail (9) intégrée ou adaptée, au nombre d'au moins une, de l'engin autonome (7) sont déterminés et transmis par le système de gestion (1).

2. Procédé selon la revendication 1, **caractérisé en ce que** l'on transmet en tant que paramètres d'utilisation (19), des données avec lesquelles on spécifie, en fonction de l'étape de travail à exécuter, quelle gamme de fonctions présente l'unité de travail (9), au nombre d'au moins une, de l'engin autonome (7) ou avec quelle gamme de fonctions de l'unité de travail (9), au nombre d'au moins une, l'engin autonome (7) doit être équipé.

3. Procédé selon la revendication 1 ou 2, **caractérisé en ce que** l'on achemine au système de gestion (1) des données de planification (12) qui sont générées, recueillies et/ou déterminées par les engins agricoles (7, 8), ainsi que des données de planification (13) qui sont fournies par des sources de données (11) externes, sachant que les données de planification (12, 13) transmises par les engins agricoles (7, 8) et/ou les sources de données (11) externes sont en corrélation temporelle les unes avec les autres ou sont indépendantes dans le temps les unes des autres.

4. Procédé selon la revendication 3, **caractérisé en ce que** l'on achemine au système de gestion (1) des données de planification (12, 13) du groupe des données de culture (16), données du sol, données de rendement (15), données de surface, données météorologiques (17), données de localisation (18), données d'itinéraire, données de cartographie d'obstacles, données de consommation, données d'état de machine (14).

5. Procédé selon une des revendications précédentes, **caractérisé en ce que** la planification du processus de travail agricole respectif est réalisée sur la base d'au moins un objectif (20) et/ou une stratégie d'optimisation à prédéfinir.

6. Procédé selon une des revendications précédentes, **caractérisé en ce que** lors de l'établissement de la planification de déploiement, on détermine des itinéraires entre un lieu de ferme et un champ (10) à travailler et entre des champs (10) à travailler, et **en ce qu'**en fonction du nombre d'engins autonomes (7) et de leur équipement individuel avec des unités de travail (9), on détermine au moins un mode de transport par lequel l'engin autonome (7), au nombre d'au moins un, est transféré suivant l'itinéraire défini.

7. Procédé selon une des revendications 2 à 6, **caractérisé en ce que** lors de l'établissement de la planification de déploiement à l'aide des données de planification (12, 13) acheminées, on détermine aux alentours du champ (10) à travailler par l'engin autonome (7), au nombre d'au moins un, au moins un emplacement vers lequel se dirige l'engin autonome (7), au nombre d'au moins un, en cas d'apparition d'un événement externe provoquant l'interruption du processus de travail agricole.

8. Procédé selon une des revendications 2 à 7, **caractérisé en ce que** lors de l'établissement de la planification de déploiement à l'aide des données de planification (12, 13) acheminées, on détermine des processus en vue de l'approvisionnement, de la réception et/ou du transfert de consommables par les engins autonomes (7) et/ou entre les engins (7, 8).

9. Procédé selon une des revendications précédentes, **caractérisé en ce que** les engins (7, 8) de la flotte de véhicules (6) qui sont actifs sur le champ à travailler effectuent un échange de données entre eux, afin que l'engin autonome (7), au nombre d'au moins un, soit informé de l'apparition d'une situation influence l'étape de travail à exécuter du processus de travail agricole.

10. Procédé selon une des revendications précédentes, **caractérisé en ce que**, pendant l'exécution du processus de travail agricole, l'engin autonome (7), au nombre d'au moins un, recueille et/ou détermine des données de fonctionnement par le biais d'au moins un dispositif à capteur (22) et enregistre ces données de fonctionnement, et **en ce que** les données de fonctionnement enregistrées sont transmises au système de gestion (1) pendant et/ou après l'exécution du processus de travail agricole.

11. Procédé selon une des revendications précédentes, **caractérisé en ce que** la flotte de véhicules (6) comprend au moins un engin (8) avec conducteur, qui est pris en compte lors de la planification du déploiement dans le champ (10), en coopération avec l'engin autonome (7), au nombre d'au moins un.

12. Procédé selon une des revendications précédentes, **caractérisé en ce que**, en vue du guidage décentralisé de plusieurs engins autonomes (7) intervenant ensemble dans un champ (10), on utilise un système de communication ainsi qu'une infrastructure de localisation (23, 24, 25).

13. Procédé selon une des revendications précédentes, **caractérisé en ce que** les engins (7, 8) de la flotte de véhicules (6) sont gérés par le système de gestion (1) en tant que parc de véhicules, l'utilisation d'un ou plusieurs engins (7, 8) autonomes et à conducteur disponibles étant validée suite à une demande de l'utilisateur.

14. Système de gestion (1) fondé sur une base de données, comprenant une unité de mémoire (2), une unité de calcul (4) et une unité de communication (26), **caractérisé en ce que** le système de gestion (1) est conçu pour la mise en œuvre du procédé selon une des revendications 1 à 13.
